# EUROPÄISCHE PATENTSCHRIFT

(11) **EP 1 131 374 B1**
(45) Veröffentlichungstag und Bekanntmachung des Hinweises auf die Patenterteilung: **02.07.2003**
(21) Anmeldenummer: 99950612.4
(22) Anmeldetag: 04.10.1999
(51) Int. Cl.: C08J 5/18, C08K 3/34, B32B 27/34

(54) **HOCHGLÄNZENDE FLEXIBLE MEHRSCHICHTIGE FOLIE MIT AUSSENSCHICHT AUS POLYAMID ENTHALTEND NANODISPERSEN FÜLLSTOFF SOWIE DEREN VERWENDUNG ZUR VERPACKUNG VON LEBENSMITTELN**
HIGH LUSTER, FLEXIBLE MULTILAYERED FILM WITH A POLYAMIDE OUTER LAYER CONTAINING NANODISPERSED FILLING MATERIAL AND UTILIZATION OF SAID FILM FOR PACKAGING FOODSTUFFS
FILM MULTICOUCHE SOUPLE TRES BRILLANT COMPORTANT UNE COUCHE EXTERIEURE EN POLYAMIDE CONTENANT DES NANOPARTICULES DE CHARGE DISPERSEES, ET SON UTILISATION POUR L'EMBALLAGE DE DENREES ALIMENTAIRES

(30) Priorität: 16.10.1998 DE 19847845
(43) Veröffentlichungstag der Anmeldung: 12.09.2001
(73) Patentinhaber: Wipak Walsrode GmbH & Co. KG, 29656 Walsrode (DE)
(72) Erfinder: EGGERS, Holger, D-29664 Walsrode (DE); KASCHEL, Gregor, D-29699 Bomlitz (DE)
(74) Vertreter: Kutzenberger, Helga, Dr.
(86) Internationale Anmeldenummer: EP9907349
(87) Internationale Veröffentlichungsnummer: WO00023508

(56) Entgegenhaltungen:
- EP-A- 0 358 415
- EP-A- 0 810 259
- EP-A- 0 818 508
- DE-A- 19 631 348
- DE-A- 19 705 998

## Beschreibung

Die vorliegende Erfindung betrifft eine flexible, mehrschichtige Folie mit einer Außenschicht aus im wesentlichen Polyamid 6, das zwischen 0,1 und 3,0% eines nanodispersen Nukleierungsmittels enthält und wenigstens einer weiteren Schicht aus Polyamid. Die erfindungsgemäße Mehrschichtfolie zeichnet sich gute optische Eigenschaften bei hoher Zähigkeit und gutem Gleitvermögen aus. Die Mehrschichtfolie ist insbesondere auf Blasfolienanlagen problemlos zu fertigen. Die mehrschichtige Folie ist mit einer geeigneten Siegelschicht auf gängigen Form-Füll-Siegel-Verpackungsmaschinen problemlos und mit hohen Abpackgeschwindigkeiten zu verarbeiten. Die hergestellten Packungen sind optisch attraktiv und widerstandsfähig gegen mechanische Beanspruchung. Die Erfindung umfaßt auch die Verwendung der erfindungsgemäßen mehrschichtigen Folie als Packmittel, insbesondere für die Verpackung von Lebensmitteln sowie die Verwendung als thermogeformte Folie. Unter einem nanodispersen Füllstoff im Sinne der vorliegenden Erfindung wird dabei ein Füllstoff verstanden, dessen kleinste, in der Dispersion eine starre Einheit bildende Teilchen im zahlengewichteten Mittel aller Teilchen in wenigstens einer, für jedes Teilchen beliebig wählbaren Richtung eine Ausdehnung von nicht mehr als 100 nm aufweisen

Für die Verpackung von verderblichen Lebensmitteln werden weit überwiegend auf Polyamid basierende Folien eingesetzt. Der Aufbau entsprechender Folien ist beispielsweise in The Wiley Encyclopedia of Packaging Technology (Hrg. M. Bakker, D. Eckroth; John Wiley & Sons, 1986) sowie in Nentwig (Joachim Nentwig: Kunststoff-Folien, Carl Hanser Verlag 1994, München) niedergelegt.

Polyamide haben als Sperrschichtmaterial in flexiblen Mehrschicht- bzw. Verbundfolien, meistens in Kombination mit Polyethylen niedriger Dichte (PE-LD), zur Verpackung von verderblichen Lebensmitteln eine seit Jahren wachsende Bedeutung erlangt. Den größten Anteil hat in diesem Bereich das Polyamid 6 (PA 6. Der Jahresverbrauch an PA 6 für diesen Markt liegt in Europa derzeit bei rund 35000 t, weltweit bei etwa 85000 t; zusätzlich werden einige tausend Tonnen Copolyamide verwendet.

Die mit Abstand größte Menge dieser Mehrschichtfolien wird unter Mitverwendung von PA 6 Typen in verschiedenen Flachfolienverfahren hergestellt. Für Blasfolienverbunde werden meistens spezielle Copolyamide eingesetzt.

Copolyamide werden fast ausschließlich im Blasfoliencoextrusionsverfahren verarbeitet. Sie sind in ihrer Erstarrungsgeschwindigkeit bzw. Kristallisationsgeschwindigkeit während der Abkühlphase deutlich langsamer als reine PA 6 Produkte. Hierdurch ist es möglich, trotz der relativ niedrigen Abkühlgeschwindigkeit des Schmelzeschlauchs durch Luftkühlung, PA/PE-Verbundfolien mit hoher Transparenz herzustellen. Auch die hier üblichen Copolyamide werden heute zum Teil mit verschiedenen Modifizierungen wie Nukleierungs- und Verarbeitungshilfsmitteln eingesetzt, so für die PA-Außenschicht einer asymmetrischen PE-X-PA-Blascoextrusionsfolie (X = Haftvermittler) zur Verbesserung der Maschinengängigkeit und Dimensionsstabilität. Geringe Einbußen an Transparenz durch die kristallisierende Wirkung der Keimbildner werden wegen der übrigen Vorteile in der Regel akzeptiert.

In vielen Fällen sind Folien erforderlich, die als Blasfolie hergestellt wurden. Vorteile einer Blasfolie ist die gegenüber Flachfolien bessere Gleichmäßigkeit der Folienrolle durch eine changierende Aufwicklung. Hierdurch wird der Blasfolie eine einer Flachfolie deutlich überlegene Planlage verliehen. Dies ist für einen schnellen Maschinenlauf vorteilhaft.

Eine außeriliegende Polyamidschicht wird nach dem Stand der Technik wegen der hervorragenden Temperatur- und Abrasionsbeständigkeit verwendet.

Die durch den Einsatz von Copolyamiden erwachsenden Nachteile liegen in der Nachkristallisation der Folie. Aufgrund der niedrigen Kristallisationsgeschwindigkeit dieser Systeme ist die Kristallisation mit der eigentlichen Formgebung noch nicht abgeschlossen. Vielmehr findet über einem längeren Zeitraum im Anschluß an die eigentliche Produktion der Folie eine Nachkristallisation statt, wodurch die Mehrschichtfolie, bedingt durch die mit der Nachkristallisation einhergehende Dimensionsänderung des in der Folie enthaltenen Polyamids, einrollen und/oder mit der Folge von Planlagemängeln auf dem Wickel stark schrumpfen kann und damit für eine Weiterverarbeitung nicht mehr geeignet ist.

Daneben weisen Copolyamide wegen der niedrigeren Kristallinität gegenüber PA6 den Nachteil einer deutlich schlechteren Gleitfähigkeit auf. Dies ist bei außenliegendem Polyamid relevant.

Nicht zuletzt erfordert die Herstellung der Copolyamide selbst den Einsatz aufwendigerer Rohstoffe und Polymerisationstechniken als die Produktion von PA6. Insoweit ergibt sich durch die Verwendung von Copolyamiden auch ein höherer Ressourcenverbrauch.

Insoweit besteht ein derzeit nicht abgedecktes Bedürfnis nach Blasfolien mit Polyamidaußenschicht, die sowohl über gute optische Eigenschaften als auch über eine gute Maschinengängigkeit im Sinne einer guten Gleitfähigkeit verfügen. Die beste existierende Lösung des Standes der Technik besteht in der Verwendung von nukleiertem Copolyamid. Diese Lösung ist jedoch aufgrund des aufwendigeren und teureren Rohstoffes Copolyamid gegenüber dem Einsatz von Polyamid 6 deutlich nachteilig.

Eine weitere wichtige Eigenschaft ist eine hohe mechanische Widerstandskraft. Dies bezieht sich insbesondere auf einen hohen Widerstand gegenüber einer Zerstörung durch Knicken und Falten, im folgenden als Knickbruchfestigkeit bezeichnet, sowie einen hohen Widerstand gegenüber dem Durchstich spitzer Gegenstände, im folgenden als Durchstichfestigkeit bezeichnet.

Nukleierungsmittel wie die oben für den Einsatz in Copolyamiden genannten Systeme sind seit längerem Stand der Technik. Sie dienen auch bei geringer Unterkühlung der Schmelze als Kristallisationskeime, um die herum sich beim Erstarrungsvorgang sphärolithische Strukturen bilden. Je nach Dispergierung und Wirksamkeit solcher Keimbildner gelingt so die Ausbildung einer Kristallstruktur mit mehr und feineren Spärolithen als im nicht nukleierten Polymer auch für den Fall einer langsamen Abkühlung aus der Schmelze heraus wie im Fall der Blasfolienherstellung. Dadurch kann ein Nachschrumpf durch Nachkristallisation minimiert werden. Die Beladung der Formmasse mit Keimbildnern ist jedoch durch die lichtstreuenden Eigenschaften der Keimbildner selbst beschränkt.

Die Zugabe sehr feinkörniger fester Partikel im Größenbereich von unterhalb eines Mikrometers in polymere Matrizen und speziell Polyamide ist ebenfalls seit längerem beschrieben. Solche Systeme werden in erster Linie zur Erhöhung der mechanischen Steifigkeit, der Barriere gegen Gase und der Wärmebeständigkeit sowie zur Verringerung der Zykluszeit etwa beim Spritzgießen, der Entflammbarkeit oder der Feuchtigkeitsaufnahme bei hydrophilen Systemen eingesetzt. Auch Systeme, die im Gegensatz zu oben genannten nukleierten Polyamiden trotz höherdosiertem Zusatz der nanoskaligen Partikel ihre Transparenz beibehalten, sind beschrieben.

EP-A- 358415 beschreibt eine Formmasse aus einem Polyamidharz mit einem darin gleichmäßig dispergierten Schichtsilikat, wobei die einzelnen Schichten des Schichtsilikats Dicken um 1 nm und Seitenlängen bis hinauf zu 1 µm aufweisen können. Die Schichten liegen in der Polyamidmatrix durch geeigneten Aufschluß separiert vor und weisen Abstände voneinander um 10 nm auf. Mit diesem Material aus Polyamid 6 als Basispolymer hergestellte Formteile wie beispielsweise Folien zeichnen sich gegenüber solchen aus reinem Polyamid 6 durch eine signifikant erhöhte Sauerstoffbarriere und Steifigkeit aus. Im gleichen Maße nimmt jedoch die Knickbruchfestigkeit merklich ab. Die Transparenz von einschichtigen amorph abgeschreckten Flachfolien sowie Blasfolien mit Wasserkühlung mit dem Aufbau Polyamidmischung//Haftvermittler//PE-LD bleibt gegenüber reinem Polyamid 6 unverändert. Die verwendeten Aufbauten erreichen damit nicht das für die hier vorliegende Anwendung nötige Eigenschaftsprofil.

WO 93 04118 sowie WO 93 11190 und WO 93 04117 offenbaren Polymer-Nano-Komposits mit ebenfalls plättchenförmigen Partikeln im Dickenbereich von wenigen Nanometem. Insbesondere werden Komposite aus PA6 und Montmorillonit bzw. PA6 und Silikaten beschrieben. Diese Materialien lassen sich zu Folien verarbeiten. Es werden Anwendungen als Monofolie sowie die Möglichkeit, Mehrschichtige Folien herzustellen, beschrieben. Dabei können die aus diesem Material gefertigten Folien optional gereckt werden, um eine noch bessere Orientierung der Nanopartikeln zu erreichen. Gegenüber solchen ohne nanoskalige Partikeln zeigen solche Folien eine höhere Steifigkeit, eine höhere Festigkeit im feuchten Zustand, eine bessere Dimensionsstabilität, eine höhere Gasbarriere und eine geringere Wasseraufnahme. Für den hier vorliegenden Anwendungsfall sind solche Folienaufbauten aufgrund der zu hohen Steifigkeit und der damit einhergehenden geringen Knickbruchfestigkeit nicht geeignet.

EP-A- 818508 offenbart eine Mischung aus 60 bis 98 % PA MXD6 mit 2 bis 40 % eines aliphatischen Polyamids, das wiederum inorganische Partikeln im Größenbercich von Nanometern enthält. Es werden Mischungen insbesondere mit PA 6 als aliphatischem Polyamid beschrieben. Daneben werden mehrschichtige Folien als daraus herstellbare Formteile beschrieben. Offenbarte Aufbauten enthalten stets die beschriebene Mischung als Innen- und/oder Außenschicht. Es werden auch Strukturen mit genannter Schicht und einer auf der Folienaußenseite befindlichen Schicht mit Nanoteilchen enthaltendem PA 6 beschrieben. Sämtliche genannten Aufbauten weisen als Vorteil eine hohe Sauerstoffbarriere auf, die auch durch eine Sterilisation nicht beeinträchtigt wird. Im Gegensatz zu Folien mit EVOH als Sauerstoffsperrschicht trüben die dort patentierten Folien durch die Sterilisation nur geringfügig ein. Gegenüber einer Flachfolie aus reinem PA6 weist eine derartige Folie mit dem Aufbau PA 6//(80 % PA MXD6 + 20 % PA 6 mit Nanoteilchen)//PA 6 keine nennenswerte Verbesserung der Transparenz auf. Für den hier vorliegenden Anwendungsfall sind solche Strukturen mit einem hohen Anteil von PA MXD6 schon wegen der geringen *Knickbruchfestigkeit* dieses Materials nicht geeignet.

EP-A- 810259 beschreibt ebenfalls eine Polyamidformmasse mit nanodispersen Füllstoffen. Durch Zugabe genügend feinteiliger Oxide, Oxihydrate oder Carbonate kann die dort gewünschte Barrierewirkung des Polyamid verbessert werden. Die Teilchen haben bevorzugt einen Durchmesser von weniger als 100 nm. Das Patent beschreibt auch mehrschichtige Folien mit wenigstens einer Schicht aus dieser Formmasse, wobei als Intention zur Verwendung genannter Formmasse stets eine Verbesserung der Sauerstoffsperre steht. Die optischen Eigenschaften der daraus geformten Folien verschlechtern sich jedoch gegenüber dem nicht additivierten System. Für die hier vorliegenden Anforderungen ist ein solches System daher nicht geeignet.

WO 98 1346 beschreibt ebenfalls den Einsatz von nanodispersen Füllstoffen zur Verbesserung der Barriereeigenschaften von Polymeren. Die Schrift legt speziell den Aufbau einer transparenten mehrschichtigen Struktur offen, deren Außenschicht ein Polymer mit einem darin zwischen 0,1 und 10 % Anteil dispergierten plättchenförmigen Mineral und einer Partikeldicke von unterhalb 100 nm enthält, wobei genannte Außenschicht auf der zur Mitte der Struktur hin weisenden Seite mit einem Metalloxid belegt ist. Es folgen eine Haftvermittlerschicht und eine weitere, als Siegelschicht dienende, Schicht, die vorzugsweise aus Polyolefinen besteht. Das Polymer der Außenschicht kann ein Polyester oder ein Polyamid sein. Die Struktur besitzt eine hohe Sauerstoffbarriere und- Festigkeit bei Erhalt der Transparenz und wird beispielsweise für die Herstellung von Schlauchbeuteln eingesetzt. Diese Struktur umfaßt dabei als festigkeitsbringende Schicht nur die das nanodisperse Mineral enthaltende Außenschicht. Eine solche Struktur, jedoch ohne Metalloxidschicht, erweist sich für den hier vorliegenden Anwendungsfall als ungeeignet, weil die Folie durch die Zugabe der nanodispersen Füllstoffe eine deutlich höhere Steifigkeit erhält, im gleichen Maße versprödet und-somit insbesondere den Anforderungen in Hinblick auf Knickbruchfestigkeit deutlich nicht genügt.

Es stellte sich die Aufgabe, eine flexible als Blasfolie herstellbare Mehrschichtfolie mit außenliegender Schicht aus im wesentlichen Polyamid 6 bereitzustellen, die zur optimalen Präsentation des Füllguts einen hohen Glanz und eine hohe Transparenz aufweist, wobei sie neben einer guten Verarbeitbarkeit auf Verpackungsmaschinen zum Schutz des Füllguts eine ausreichende Knickbruch- und Durchstichfestigkeit aufweisen muß.

Erfindungsgemäß gelang dies durch Bereitstellung einer gegebenenfalls eine Siegelschicht aufweisenden mehrschichtigen Folie mit einer Außenschicht aus Polyamid, enthaltend nanoskalige partikuläre Nukleierungsmittel sowie wenigstens einer weiteren Schicht aus Polyamid, wobei
das die Außenschicht bildende Polyamid zu wenigstens 90 % Polyamid 6, bezogen auf die gesamte Masse des Polyamids in dieser Schicht, enthält,
die kleinsten in der Dispersion eine starre Einheit bildenden Bestandteile der in der Außenschicht dispergierten Partikeln im zahlengewichteten Mittel aller Bestandteile in wenigstens einer, für jedes Bestandteil beliebig wählbaren, Richtung eine Ausdehnung von nicht mehr als 100 nm aufweisen,
bei einer Abkühlung der Außenschicht aus dem vollständig aufgeschmolzenen Zustand mit einer⁻Abkühlrate zwischen 10° und 20°C pro Minute kristalline Strukturen entstehen, die von der Oberfläche der darin dispergierten Partikeln ausgehen,
alle weiteren Polyamidschichten die in der Außenschicht enthaltenen Partikeln mit höchstens einem Zehntel des Gewichtsanteils der Partikeln in der Außenschicht enthalten,
und die Dicke der Außenschicht unter 50 % der Gesamtdicke aller Polyamid enthaltenden Schichten beträgt.

Der Gewichtsanteil der in der Außenschicht dispergierten Partikel, bezogen auf das Gesamtgewicht der die Außenschicht bildenden Zusammensetzung liegt zwischen 0,1 und 3 %, bevorzugt zwischen 0,2 und 2,0 %.

Das die Außenschicht bildende Polyamid kann neben Polyamid 6 Polyamid der Typen Polyamid 10, Polyamid 12, Polyamid 66, Polyamid 610, Polyamid 6I, Polyamid 612, Polyamid 6/66, Polyamid 6I/6T, Polyamid MXD6, Polyamid 6/6I, Polyamid 6/6T, Polyamid 6/IPDI oder andere aliphatische oder aromatische Homound Copolyamide oder Mischungen daraus enthalten. Bevorzugt enthält die Außenschicht reines Polyamid 6. Zu hohe Zugabemengen an anderen Polyamiden verschlechtem insbesondere die Gleiteigenschaften der Folie.

Die weiteren neben der Außenschicht aus Polyamid bestehenden Schichten können jeweils Polyamid der Typen Polyamid 6, Polyamid 10, Polyamid 12, Polyamid 66, Polyamid 610, Polyamid 6I, Polyamid 612, Polyamid 6/66, Polyamid 6I/6T, Polyamid MXD6, Polyamid 6/6I, Polyamid 6/6T, Polyamid 6/IPDI oder andere aliphatische oder aromatische Homo- und Copolyamide oder Mischungen daraus enthalten. In bevorzugter Form werden Mischungen aus den genannten Polyamiden mit mindestens 80 Gewichts-% Polyamid 6, bezogen auf das Gesamtgewicht der Mischung, eingesetzt. Besonders bevorzugt ist der Einsatz von reinem Polyamid 6 in diesen Schichten.

Es ist grundsätzlich auch möglich, die weiteren neben der Außenschicht aus Polyamid bestehenden Schichten mit dispergierten Partikeln wie in der Außenschicht auszustatten.

Die aus Polyamid bestehenden Schichten der erfindungsgemäßen Folie können auch übliche weitere Additive, die die Funktionalität der Folie verbessern, wie Gleitmittel, insbesondere Ethylenbisstearylamid enthalten. Die Außenschicht kann zusätzlich Antiblockmittel enthalten Diese sind bekannte feste anorganische Partikel, die aus der äußeren Oberfläche der Oberfläche hervortreten und auf diese Weise das Gleitverhalten der Folie verbessern. Hierfür geeignet sind Siliziumoxid, Calciumcarbonat, Magnesiumsilikat, Aluminiumsilikat, Calciumphosphat, Talkum und dergleichen. Bevorzugt kommt daraus Siliciumdioxid zum Einsatz. Wirksame Mengen liegen im Bereich von 0,1 bis 2 Gewichts-%, vorzugsweise 0,1 bis 0,8 Gewichts-%. Die mittlere Teilchengröße liegt zwischen 1 und 15 um, wobei hier Teilchen mit kugelförmiger Gestalt besonders geeignet sind.

Die Dicke der Außenschicht beträgt bevorzugt höchstens 40% der Gesamtdicke aller Polyamid enthaltenden Schichten. Zu hohe Dicken der Schicht (I) führen auf eine zu spröde Mehrschichtfolie.

Bevorzugt sind Partikeln, deren kleinste in der Dispersion eine starre Einheit bildenden Bestandteile in zwei senkrecht zueinander stehenden, beliebig wählbaren, Richtungen jeweils eine Ausdehnung von wenigstens dem Zehnfachen der Größe der Bestandteile in der Richtung mit der geringsten Ausdehnung des Bestandteils aufweisen. Die Dicke dieser Teilchen ist bevorzugt kleiner als 10 nm. Die in der Außenschicht eingesetzten Partikeln sind bevorzugt Schichtsilikate. Diese können ausgewählt sein aus der Gruppe umfassend Phyllosilikate wie Magnesiumsilikat oder Aluminiumsilikat, sowie Montmorillonit, Saponit, Beidellit, Nontronit, Hectorit, Stevensit, Vermiculit, Halloysit oder deren synthetische Analoga.

Die crfindungsgemäße mehrschichtige Folie kann zur Erleichterung der Heißsiegelbarkeit eine Siegelschicht auf der der Außenschicht abgewandten Seite der mehrschichtige Folie aufweisen. Die Siegelschicht bildet somit die dem Füllgut zugewandte Innenseite der mehrschichtige Folie. Die Siegelschicht enthält in bevorzugter Form die üblicherweise als Siegelmedium verwendeten Polymere oder Mischungen aus Polymeren aus der Gruppe umfassend Copolymerisate aus Ethylen und Vinylacetat (E/VA), besonders bevorzugt mit einem Vinylacetat-Gehalt, bezogen auf das Gesamtgewicht des Polymers, von höchstens 20 %, Copolymerisate aus Ethylen und ungesättigten Estern wie Butylacrylat oder Ethylacrylat (E/BA bzw. E/EA), Copolymerisate aus Ethylen und ungesättigten Carbonsäuren (E/AA, E/MAA), besonders bevorzugt mit einem Gehalt des Carbonsäurecomonomers, bezogen auf das Gesamtgewicht des Polymers, von höchstens 15 %, in noch weiter bevorzugter Form höchstens 8 %, Salze der Copolymerisate aus Ethylen und ungesättigten Carbonsäuren, insbesondere E/MAA, (Ionomere), besonders bevorzugt mit einem Gehalt des Carbonsäurecomonomers, bezogen auf das Gesamtgewicht des Ionomers, von höchstens 15%, in noch weiter bevorzugter Form höchstens 10%, Polyethylen niedriger Dichte (PE-LD), besonders bevorzugt in einer Dichte von wenigstens 0,91 g/cm³ und höchstens 0,935 g/cm³, Polyethylen hoher Dichte (PE-HD), Copolymerisate (PE-LLD) aus Ethylen und α-Olefinen mit wenigstens 3 C-Atomen, beispielsweise Buten, Hexen, Octen, 4-Methyl-1-Penten. Die Copolymerisate (PE-LLD) aus Ethylen und α-Olefinen können mit konventionellen Katalysatoren oder mit Metallocen-Katalysatoren hergestellt sein. Besonders bevorzugt sind daraus Copolymerisate (PE-LLD) aus Ethylen und α-Olefinen mit einer Dichte von wenigstens 0,90 g/cm³ und höchstens 0,94 g/cm³.

Die erfindungsgemäße Folie kann auch eine mehrschichtig ausgeführte Siegelschicht enthalten. So können die oben genannten Polymere etwa zur Kostenoptimierung in einer solchen Weise angeordnet sein, daß die auf der Innenseite der Folie liegende, dem Produkt zugewandte, Einzelschicht sich durch einen besonders frühen Siegelbeginn auszeichnet und die sich zur Folienmitte daran anschließende Einzelschicht erst bei höheren Temperaturen schmilzt, jedoch dafür kostengünstiger ist oder durch eine höhere Schmelzefestigkeit die Produzierbarkeit einer solchen mehrschichtigen Siegelschicht als Blasfolie erst ermöglicht. Es können in der Siegelschicht auch haftvermittelnde Polymere aus den genannten Stoffgruppen oder auf deren Basis hergestellte, etwa mit Anhydrid durch Propfung modifizierte, Polymere zum Einsatz kommen. Beispiele für solche Aufbauten sind die Schichtenfolgen PE-LD//E/VA oder PE-LD//E/AA//Ionomer.

Alle oder einzelne Schichten der Siegelschicht können zusätzlich mit Additiven ausgestattet sein, die die Funktionalität der Folie verbessern. Beispiele sind als Antiblockmittel bekannte feste anorganische Partikel, die aus der äußeren Oberfläche der Siegelschicht hervortreten und auf diese Weise das Gleitverhalten der Folie verbessern. Hierfür geeignet sind Siliziumoxid, Calciumcarbonat, Magnesiumsilikat, Aluminiumsilikat, Calciumphosphat, Talkum und dergleichen. Bevorzugt kommt daraus Siliciumdioxid zum Einsatz. Wirksame Mengen liegen im Bereich von 0,1 bis 2 Gew.-%, vorzugsweise 0,1 bis 0,8 Gew.-%. Die mittlere Teilchengröße liegt zwischen 1 und 10 µm, bevorzugt 2 und 5 µm, wobei hier Teilchen mit kugelförmiger Gestalt besonders geeignet sind. In mehrlagigen Siegelschichten werden diese Partikel bevorzugt nur in der äußeren Einzelschicht eingesetzt. Andere Additive, die die Gleitfähigkeit der Innenseite der mehrschichtige Folie, auch in Zusammenwirken mit den genannten festen Partikeln, verbessern, sind die üblicherweise als Gleitmittel bezeichneten höheren aliphatischen Säureamide, höhere aliphatische Säureester, Wachse, Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-%. Ein insbesondere für die oben genannten, in der Siegelschicht verwendeten, Polymere geeignetes aliphatisches Säureamid ist Erucasäureamid.

Die erfindungsgemäße mehrschichtige Folie kann zusätzlich zu der Außenschicht aus Polyamid und gegebenenfalls üblichen Additiven und wenigstens einer weiteren Schicht aus Polyamid und gegebenenfalls üblichen Additiven und der Siegelschicht auch eine oder mehrere EVOH-haltige Schichten zur Verbesserung der Sauerstoffsperreigenschaften enthalten, wobei die EVOH-haltige Schichten bevorzugt wenigstens 50 Gew.-%, bezogen auf das Gesamtgewicht der jeweiligen EVOHhaltigen Schicht, eines EVOH mit wenigstens 85 und höchstens 40 Mol-% Vinylacetat, das zu wenigstens 90 % verseift ist, enthalten. In einer besonders bevorzugten Form ist eine EVOH-haltige Schicht unmittelbar zwischen zwei polyamidhaltigen Schichten angeordnet, von denen eine die Außenschicht sein kann.

Die erfindungsgemäße Folie kann zusätzlich zu der Außenschicht aus Polyamid und gegebenenfalls üblichen Additiven und wenigstens einer weiteren Schicht aus Polyamid und gegebenenfalls üblichen Additiven, und gegebenenfalls der oder den EVOH-haltige(n) Schicht(en) und der Siegelschicht ein oder mehrere haftvermittelnde Schichten enthalten. Eine solche haftvermittelnde Schicht ist bevorzugt ein Kaschierklebstoff auf Basis von Polyurethanen oder Polyesterurethanen oder ein extrudierbarer Haftvermittler. Als extrudierbarer Haftvermittler werden bevorzugt modifizierte Polyolefine eingesetzt. In bevorzugter Form sind dies Polyolefine mit Carboxylgruppen, wie z.B. Polyethylen, Polypropylen, Ethylen/α-Olefin-Copolymerisate oder Ethylen/Vinylacetat-Copolymerisate, die mit mindestens einem Monomer aus der Gruppe der α,β-einfach ungesättigten Dicarbonsäuren, wie beispielsweise Maleinsäure, Fumarsäure, Itaconsäure oder deren Säureanhydriden, Säureestern, Säureamiden und Säureimiden, gepfropft sind. Als extrudierbare Haftvermittler können daneben Copolymerisate von Ethylen mit α,β-einfach ungesättigten Dicarbonsäuren, wie Acrylsäure, Methacrylsäure und/oder deren Metallsalze mit Zink oder Natrium und/oder deren Alkyl(C₁-C₄)ester oder entsprechende Pfropfpolymere auf Polyolefine wie z.B. Polyethylen, Polypropylen oder Ethylen/α-Olefin-Copolymerisate, die mit einem Monomer der genannten ungesättigten Säuren pfropfpolymerisiert sind, zum Einsatz kommen. Besonders bevorzugt sind Polyolefine mit aufgepfropftem α,β-einfach ungesättigten Dicarbonsäureanhydrid, insbesondere mit Maleinsäureanhydrid gepropfte Ethylen/α-Olefin-Copolymerisate. Im allgemeinen weisen die durch einen Haftvermittler verbundenen Schichten keine genügend hohe Adhäsion zueinander auf. Es können jedoch auch Haftvermittlerschichten zwischen zwei direkt coextrudierbaren Schichten zum Einsatz kommen, um etwa die Flexibilität der Folie zu beeinflussen.

Es ist grundsätzlich auch möglich, die erfindungsgemäße mehrschichtige Folie neben der Außenschicht aus Polyamid und gegebenenfalls üblichen Additiven und wenigstens einer weiteren Schicht aus Polyamid und gegebenenfalls üblichen Additiven, gegebenenfalls der oder den EVOH-haltige(n) Schicht(en) und der Siegelschicht und/oder ein oder mehreren haftvermittelnden Schichten mit einer inneren Schicht auszustatten, die in der Zusammensetzung der Außenschicht entspricht. Ein solches Vorgehen bringt jedoch im Hinblick auf die im Sinne der Aufgabe angestebten Eigenschaften keinerlei Vorteile.

Zusätzlich zu der Außenschicht aus Polyamid und gegebenenfalls üblichen Additiven und wenigstens einer weiteren Schicht aus Polyamid und gegebenenfalls üblichen Additiven, gegebenenfalls der oder den EVOH-haltige(n) Schicht(en) und der Siegelschicht und/oder ein oder mehreren haftvermittelnden Schichten. kann die erfindungsgemäße mehrschichtige Folie noch weitere polymere Schichten enthalten.

Die erfindungsgemäße mehrschichtige Folie kann auch nach der Extrusion einem Reckvorgang unterzogen werden. Die Orientierung kann nur in Längsrichtung, nur in Querrichtung, zuerst in Längs- und anschließend in Querrichtung, simultan in Längsund Querrichtung oder in Kombinationen aus diesen Schritten erfolgen. Dabei kann die Reckung für die gesamte mehrschichtige Folie oder für Teilverbunde daraus, insbesondere dieAußenschicht, durchgeführt werden.

Die erfindungsgemäße mehrschichtige Folie kann zwischen zwei inneren Schichten mit einer Schicht aus einem Metalloxid oder Nichtmetalloxid, darstellbar als AOx, versehen werden. Diese Schicht weist vorzugsweise eine Dicke von 5 bis 200 nm auf. In genannter Summenformel liegt x zwischen 1 und 2,5; A ist vorzugsweise Silizium, Eisen oder Aluminium.

Die crfindungsgemäße Folie kann auch auf der Außenseite, der Innenseite oder zwischen einzelnen Schichten bedruckt sein.

Mit der erfindungsgemäßen Folie gelingt es überraschenderweise, eine Blasfolie mit einer außenliegenden PA-Schicht und guten optischen Eigenschaften ohne die Verwendung von Copolyamiden bereitzustellen.

Damit überwindet die erfindungsgemäße Mehrschichtfolie einen von der Fachwelt für coextrudierte Blasfolien durchgängig akzeptierten Nachteil.

Die erfindungsgemäße Folie ermöglicht somit eine Minimierung des Einsatzes von in der Herstellung aufwendigeren Rohstoffen wie Copolyamiden. Dies ermöglicht eine gegenüber dem Stand der Technik ressourcensparende Fertigung der erfindungsgemäßen Folie.

Es war nicht zu erwarten, daß die Folie durch den mehrschichtigen Aufbau darüberhinaus auch eine gute mechanische Flexibilität bei guter Knickbruch- und Durchstichfestigkeit erreicht.

Gegenüber herkömmlich nukleierten Folien ist die erfindungsgemäße Mehrschichtfolie in den optischen Eigenschaften weitaus überlegen.

Gegenstand der Erfindung ist auch die Verwendung der erfindungsgemäßen mehrschichtige Folie zur vorzugsweise maschinellen Verpackung von Lebensmitteln, insbesondere zur Herstellung von Beuteln auf Schlauchbeutelmaschinen sowie als Mulden- und Deckelfolie in Thermoform-Füll-Siegel-Maschinen.

### Beispiele

Bei mehrschichtigen Aufbauten wird die Schichtenfolge durch eine Aneinanderreihung der Kurzzeichen der Polymere der entsprechenden Schichten oder anderweitig erläuterter Symbole, voneinander getrennt durch doppelte Schrägstriche, wiedergegeben. Die Seite der Siegelschicht ist dabei stets rechts. Dabei kann auch nur ein Teil der gesamten, die Folie ausmachenden, Schichtenfolge angegeben werden. In diesen Fällen ist ebenfalls die Seite der Siegelschicht stets rechts und nicht angegebene Schichten oder Kombinationen von Schichten durch drei Punkte, ..., kenntlich gemacht. Mischungen aus unterschiedlichen Polymeren werden durch das Kennzeichen + sowie die Zusammenfassung der Komponenten in Klammern, ( ), kenntlich gemacht. Gegebenenfalls können hier zusätzlich Angaben zur prozentualen Zusammensetzung gemacht werden. Wenn nicht anders angegeben handelt es sich in solchen Fällen stets um Gewichtsanteile, die auf das Gesamtgewicht der Mischung bezogen sind. So beschreibt beispielsweise der Ausdruck ...//PA//EVOH//...//(PE-LD+PE-LLD)//d einen Aufbau mit einer nicht spezifizierten Außenschicht oder außenliegenden Schichtenfolge, gefolgt von einer im wesentlichen aus Polyamid bestehenden Schicht, gefolgt von einer im wesentlichen aus Ethylen/Vinylalkohol-Copolymerisat (EVOH) bestehenden Schicht, gefolgt von einer nicht spezifizierten Schicht oder Schichtenfolge, gefolgt von einer Schicht, die eine Mischung aus Polyethylen niedriger Dichte (PE-LD) und einem Ethylen/α-Olefin-Copolymerisat (PE-LLD) umfaßt, sowie einer mit d näher zu spezifizierenden, auf der Siegelseite folgenden Schicht.

An den gefertigten Mustern wurden die folgenden physikalischen und anwendungstechnischen Eigenschaften wie folgt gemessen:
- Das Reibungsverhalten nach DIN 53 375. Gemessen werden die Reibkoeffizienten für die Haftreibung zwischen Folie und Folie. Es wird stets die Polyamidaußenseite der beispielhaften Folien untersucht. Die Messung wurde bei 23°C durchgeführt.
- Die Durchstichfestigkeit als die zum Durchstechen einer membranartig aufgespannten Folie mit einem spitzen Prüfdorn von der Siegelseite aus notwendige Kraft, der notwendige Weg sowie die notwendige Arbeit. Dabei ist die Durchsticharbeit für die Beurteilung der Festigkeit gegenüber spitzen Gegenständen in der Praxis erfahrungsgemäß am besten geeignet. Die Messung erfolgt mit einer elektronischen Zugprüfmaschine der Klasse 1 nach DIN 51 221 mit einer Prüfgeschwindigkeit von 100 mm/min. Dazu werden aus der Folie kreisförmige Muster mit einem Durchmesser von 80 mm entnommen und membranartig in die einen Durchmesser von 50 mm aufweisende Probenhalterung des Prüfgerätes eingespannt. Der Prüfdorn ist aus Metall gefertigt und hat einen Durchmesser von 2 mm. An seiner Spitze verjüngt er sich über eine Länge von 5 mm auf einen Durchmesser von 1 mm, wobei der vordere Teil mit einem Radius von 0,5 mm abgerundet ist. Die Durchsticharbeit ergibt sich durch Integration der auf den Prüfdorn wirkenden Kraft über den von ihm zurückgelegten Weg bis zum Versagen der Folie. Sämtliche Untersuchungsschritte wurden bei 23°C und 50 % relativer Luftfeuchtigkeit vorgenommen. Die Prüfungen wurden jeweils an drei Mustern durchgeführt und die Ergebnisse gemittelt.
- Die Knickbruchfestigkeit bei einer Temperatur von 23°C und einer relativen Feuchte von 50 %, indem ein Probenzuschnitt einlagig zu einem Zylinder der Länge 198 mm und einem Umfang von 280 mm aufgerollt und beidseitig in entsprechend geformten Halterungen eingespannt wird. Die freie Länge des von der Folie geformten Zylinders zwischen den Halterungen beträgt 192 mm. Unter gleichzeitiger Drehung um 440° um die den Zylinder beschreibende Symmetrieachse werden die Halterungen mit einer gegebenen Zahl von Zyklen und einer Frequenz von 35 Zyklen pro Minute auf einen Abstand von 40 mm einander angenähert. Die zu prüfenden Folien werden zuvor 7 Tage in einem Klima von 23°C und 50 % relativer Luftfeuchte gehalten. Die Zahl der auf diese Weise in der Folie nach der vorgegebenen Zahl von Hüben entstandenen Knickbrüche läßt sich durch einseitiges Benetzen der Folie mit Ammoniaklösung bei gleichzeitigem Kontakt der anderen Folienseite zu einem Bogen Lichtpauspapier bestimmen. Die Zahl der nach 15 min erkennbaren, durch Ammoniak hervorgerufenen, blauschwarzen Flecken auf dem Lichtpauspapier wird der Zahl der Knickbrüche im untersuchten Folienabschnitt zugeordnet. Der Wert wird dabei als Durchschnitt der Einzelwerte aus zwei Prüfmustern gewonnen.
- Die Trübung nach ASTM D 1003.
- Der Glanz auf der Polyamidaußenseite der Folie unter einem Winkel von 20° nach DIN 67530.
- Die Produzierbarkeit als Blasfolie unter den genannten Bedingungen. Es wurde insbesondere die Faltenbildung der Folie in der Flachlegung beurteilt. Es wurde zwischen den Kategorien produzierbar (ja) sowie nicht produzierbar (nein) unterschieden.
- Der Schrumpf der Folie als Maß für die Dimensionsinstabilität als die auf die ursprüngliche Breite der Folie bezogene Abnahme der Breite der äußersten Lage der gefertigten Folienrolle nach dreiwöchiger Lagerung bei 23°C und 50 % relativer Feuchte.

### Versuchsreihe 1:

Es wurden dreischichtige coextrudierte Blasfolien mit verschiedenen Polyamidzusammensetzungen in der Außenschicht gefertigt.

### Vergleichsbeispiel 1.1 (V1.1):

Eine Folie mit dem Aufbau PA-1//HV//PE-LD in den Dicken 40//10//150 µm wird als Blasfolie nach dem für die Produktion von Blasfolien üblichen Verfahren produziert. Die Temperatur der Kühlluft beträgt 20°C. Die Düse hat einen Durchmesser von 300 mm, und die Folie wird auf eine Breite von 720 mm flachgelegt sowie anschließend auf eine Breite von 700 mm geschnitten. Der Schlauch wurde jedoch auf dem Wickel nicht verlegt. Direkt nach dem Schnitt erfolgt die Trennung der Schlauchhälften und die Aufwicklung der Folie. Der Ausstoß der Düse beträgt 100 kg/h. Die PA enthaltende Schicht bildet die Außenseite des Folienschlauchs.

PA-1 ist ein Polyamid 6 mit 600 ppm Ethylen-Bisstearylamid und ist mit ca. 150 ppm Talkum nukleiert.

Der Haftvermittler ist ein mit Maleinsäureanhydrid gepfropftes LLDPE mit einer Dichte von 920 kg/m³ und einem MFI von 2,7 g/10 min gemessen bei 190°C und einem Auflagegewicht von 2,16 kg. Als PE-LD wurde ein Material mit einer Dichte von 928 kg/m³ und einem MFI von 1 g/10 min gemessen bei 190°C und einem Auflagegewicht von 2,16 kg verwendet.

### Vergleichsbeispiel 1.2 (V1.2):

Die Folie aus Vergleichsbeispiel 1.1 wird mit dem Aufbau PA-2// HV//PE-LD nach dem Verfahren sowie mit gleichen Schichtdicken, gleichem Haftvermittler und PE-LD wie in Vergleichsbeispiel 1 gefertigt. PA-2 ist ein Polyamid 6 enthaltend 2 Gewichts-% Montmorillonit. Der Montmorillonit liegt durch geeigneten Aufschluß in dispergierter Form als Plättchen vor. Die Plättchen haben eine Dicke von ca. 1 nm und einen Durchmesser von 100 bis 1000 nm.

### Vergleichsbeispiel 1.3 (V1.3):

Die Folie aus Vergleichsbeispiel 1.1 wird mit dem Aufbau PA-3// HV//PE-LD nach dem Verfahren sowie mit gleichen Schichtdicken, gleichem Haftvermittler und PE-LD wie in Vergleichsbeispiel 1 gefertigt. PA-3 ist ein Copolyamid der Type PA6/IPDI mit einem Schmelzpunkt von 210°C. Es ist nicht nukleiert. Das Copolyamid wird zusätzlich mit 2000 ppm eines synthetischen Siliziumdioxid als Antiblockmittel ausgestattet. Das verwendete Siliziumdioxid hat einen Partikeldurchmesser von ca. 8 µm.

Untenstehende Tabelle führt die an den dreischichtigen Folien der Versuchsreihe 1 gemessenen Eigenschaften auf:

**Tabelle:**

| Eigenschaften der Folien aus Versuchsreihe 1 | | | |
|---|---|---|---|
| Merkmal (Einheit) | Beispiel (B) oder Vergleichsbeispiel (V) Aufbau PA//HV//PE-LD, 40//10//150 µm | | |
| | V1.1 | V1.2 | V1.3 |
| Polyamid | PA6 | PA6 mit 2 % Montmorillonit | PA6/IPDI |
| Glanz (Glanzeinheiten) | 51 | 91 | 83 |
| Trübung (%) | 22 | 12 | 14 |
| Lochzahl nach 250 Hüben | 6 | 13,5 | 3 |
| Durchsticharbeit (N cm) | 1,1 | 0,8 | 1,2 |
| Haftreibkoeffizient Folie/Folie 23°C (-) | 0,31 | 0,37 | 1,6 |
| Schrumpf nach Herstellung (%) | 0,5 | 0,3 | 1,4 |
| Produzierbarkeit | ja | nein* | ja |

Erkennbar ist, daß durch Verwendung eines Copolyamids (V1.3) in der Außenschicht gute optische Eigenschaften in Form von Glanz und Trübung erreicht werden. Jedoch erweist sich diese Folie als wenig gleitfähig und schrumpft auf der Rolle stark nach. Die Verwendung von reinem Polyamid 6 in der Außenschicht führt zu einer optisch unattraktiven Folie, während außenliegendes Polyamid mit 2 % nanoskalig dispergiertem Schichtsilikat zwar eine optisch ansprechende und nicht nachschrumpfende Folie erzeugt, die jedoch eine zu geringe Knickbruch- und Durchstichfestigkeit aufweist.

Sämtliche Folien der Versuchsreihe 1 erfüllen nicht die Anforderungen der hier zugrundeliegenden Aufgabe.

### Versuchsreihe 2:

Es wurden drei- sowie fünfschichtige Folien mit einer außenliegenden Schicht aus Polyamid 6 mit 2% darin dispergiertem nanoskaligen Schichtsilikat hergestellt.

### Vergleichsbeispiel 2.1 (V 2.1)

entspricht Vergleichsbeispiel 1.2

### Vergleichsbeispiel 2.2 (V2.2):

Eine Folie mit dem Aufbau PA-2//HV//PA-1//HV//PE-LD in den Dicken 20//10//20//10//140 µm wird als Blasfolie nach dem Verfahren und mit dem gleichen Haftvermittler und PE-LD wie in Vergleichsbeispiel 1.1 gefertigt. PA-2 ist das Polyamid aus Vergleichsbeipiel 1.2 und PA-1 das Polyamid aus Vergleichsbeispiel 1.1.

### Beispiel 2.3 (B2.3):

Folie wie in Vergleichsbeispiel 2.2, jedoch mit den Schichtdicken 5//10//35//10//140 µm.

### Vergleichsbeispiel 2.4 (V2.4):

Folie wie in Vergleichsbeispiel 2.2 mit dem Aufbau PA-2//HV//PA-2//HV//PE-LD.

Untenstehende Tabelle führt die an den drei- und fünfschichtigen Folien der Versuchsreihe 2 gemessenen Eigenschaften auf:

**Tabelle:**

| Eigenschaften der Folien aus Versuchsreihe 2 | | | | |
|---|---|---|---|---|
| Merkmal (Einheit) | Beispiel (B) oder Vergleichsbeispiel (V) Aufbau PA*//HV//PA//HV//PE-LD bzw. PA*//HV//PE-LD PA* = PA6 mit 2 % nanoskaligem Schichtsilikat | | | |
| | V2.1 | V2.2 | B2.3 | V2.4 |
| Dicken (µm) | 40/10/150 | 20/10/20/10/140 | 5/10/35/10/140 | 20/10/20/10/140 |
| Dicke Außenschicht zu Dicke aller PA-Schichten (%) | 100 | 50 | 12,5 | 50 |
| PA der Innenschicht | keine Innenschicht | PA6 | PA6 | PA6 mit 2 % Montmorillonit |
| Glanz (Glanzeinheiten) | 91 | 89 | 90 | 90 |
| Trübung (%) | 12 | 12 | 11 | 13 |
| Lochzahl nach 250 Hüben | 13,5 | 11 | 7 | 15 |
| Durchsticharbeit (N cm) | 0,8 | 0,9 | 1,0 | 0,8 |
| Haftreibkoeffizient Folie/Folie 23°C (-) | 0,37 | 0,33 | 0,35 | 0,40 |
| Schrumpf nach Herstcllung (%) | 0,3 | 0,4 | 0,5 | 0,3 |
| Produzierbarkeit | nein* | nein* | ja | nein* |

| | | | | |
|---|---|---|---|---|
| Erläuterungen zur Produzierbarkeit: * Die Folie ist so steif, daß der Folienschlauch nicht ruhig ist und sich in der Flachlegung Falten bilden. | | | | |

Sämtliche Folien zeigen gute optische Eigenschaften, eine hohe Gleitfähigkeit sowie einen niedrigen Schrumpf. Zu große Schichtdicken eines Polyamid 6 mit 2 % nanodispersem Montmorillonit führen auf eine sehr steife Folie, die hinsichtlich der Knickbruchfestigkeit Nachteile aufweist. Daneben erweisen sich solche Folien als Blasfolie als nicht produzierbar. Eine Folie mit einer 5 µm starken Außenschicht aus Polyamid 6 mit 2 % nanodispersem Montmorillonit vermeidet diese Nachteile und wird der hier gestellten Aufgabe gerecht.

### Versuchsreihe 3

Es wurden fünfschichtige Blasfolien mit dem Aufbau PA//HV//PA//HV//PE-LD coextrudiert, die eine Innenschicht aus reinem polyamid 6 und eine dünne Außenschicht aus Polyamid 6 mit darin dispergiertem Montmorillonit aufweisen. Dabei wurde die Konzentration des Schichtsilikats variiert. Die Dickenverteilung beträgt 5//10//35//10//140 µm.

### Beispiel 3.1 (B3.1):

entspricht Beispiel 2.3, d.h. eine Folie mit dem Aufbau PA-2//HV//PA-1//HV//PE-LD mit PA-2 und PA-1 aus den Vergleichsbeispielen 1.2 und 1.1.

### Vergleichsbeispiel 3.2 (V 3.2)

Folie wie in Beispiel 3.1 mit dem Aufbau (5 % PA-2 + 95 % PA-1)//HV//PA-1//HV//PE-LD.

### Beispiel 3.3 (B 3.3)

Folie wie in Beispiel 3.1 mit dem Aufbau (10 % PA-2 + 90 % PA-1)//HV//PA-1//HV//PE-LD.

### Vergleichsbeispiel 3.4 ( V 3.4)

Folie wie in Beispiel 3.1 mit dem Aufbau PA-4//HV//PA-1//HV//PE-LD. PA-4 ist ein Polyamid 6 enthaltend 5 Gewichts-% Montmorillonit. Der Montmorillonit liegt durch geeigneten Aufschluß in dispergierter Form als Plättchen vor. Die Plättchen haben eine Dicke von ca. 1 nm und einen Durchmesser von 100 bis 1000 nm.

Untenstehende Tabelle führt die an den fünfschichtigen Folien der Versuchsreihe 3 gemessenen Eigenschaften auf:

**Tabelle:**

| Eigenschaften der Folien aus Versuchsreihe 3 | | | | |
|---|---|---|---|---|
| Merkmal (Einheit) | Beispiel (B) oder Vergleichsbeispiel (V) Aufbau PA//HV//PA'//HV//PE-LD 5/10/35/10/140 µm PA' der Innenschicht = reines PA6 | | | |
| | B3.1 | V3.2 | B3.3 | V3.4 |
| Anteil Schichtsilikat in der Außenschicht (Gew.-%) | 2 | 0,1 | 0,2 | 5 |
| Glanz (Glanzeinheiten) | 90 | 63 | 85 | 93 |
| Trübung (%) | 11 | 20 | 13 | 12 |
| Lochzahl nach 250 Hüben | 7 | 5,5 | 6,5 | 24 |
| Durchsticharbeit (N cm) | 1,0 | 1,0 | 1,0 | 0,6 |
| Haftreibkoeffizient Folie/Folie 23°C (-) | 0,35 | 0,30 | 0,32 | 0,32 |
| Schrumpf nach Herstellung (%) | 0,5 | 0,6 | 0,6 | 0,5 |
| Produzierbarkeit | ja | ja | ja | nein* |

| | | | | |
|---|---|---|---|---|
| Erläuterungen zur Produzierbarkeit: * Die Folie ist so steif, daß der Folienschlauch nicht ruhig ist und sich in der Flachlegung Falten bilden. | | | | |

Ein optimaler Konzentrationsbereich der nanodispersen Nukleierungsmittel in der Außenschicht liegt danach zwischen 0,1 und 3 Gewichts-%. Zu niedrige Beladungen führen auf nachlassende optische Eigenschaften während zu hohe Beladungen wiederum eine versprödende Wirkung mit sich bringen und auf niedrige Knickbruchfestigkeiten sowie Probleme bei der Fertigung führen.

## Patentansprüche

1. Eine gegebenenfalls eine Siegelschicht aufweisende mehrschichtige Folie mit einer Außenschicht aus Polyamid enthaltend zwischen 0,1 und 3 Gew%, bezogen auf das Gesamtgewicht der die Außenschicht bildenden Zusammensetzung, eines nanoskaligen, partikulären, dispergierten Nukleierungsmittels sowie wenigstens einer weiteren Schicht aus Polyamid, **dadurch gekennzeichnet, daß** a) das die Außenschicht bildende Polyamid zu wenigstens 90 % aus Polyamid 6, bezogen auf die gesamte Masse des Polyamids in dieser Schicht, besteht, b) die kleinsten in der Dispersion eine starre Einheit bildenden Bestandteile der in der Außenschicht dispergierten Partikeln im zahlengewichteten Mittel aller Bestandteile in wenigstens einer, für jeden Bestandteil beliebig wählbaren Richtung eine Ausdehnung von nicht mehr als 100 nm aufweisen, c) ggf. alle weiteren Polyamidschichten die in der Außenschicht enthaltenen Partikeln zu höchstens einem Zehntel des Gewichtsanteils der in der Außenschicht enthaltenden Partikeln aufweisen und d) die Dicke der Außenschicht unter 50% der Gesamtdicke aller Polyamid enthaltenden Schichten beträgt.

2. Mehrschichtige Folie nach Anspruch 1, **dadurch gekennzeichnet, daß** der Gewichtsanteil der in der Außenschicht dispergierten Partikel, bezogen auf das Gesamtgewicht der die Außenschicht bildenden Zusammensetzung, zwischen 0,2 und 2 Gew% liegt.

3. Mehrschichtige Folie nach Anspruch 1 oder 2, **dadurch gekennzeichnet, daß** die Dicke der Außenschicht höchstens 40 % der Gesamtdicke aller Polyamid enthaltenden Schichten beträgt.

4. Mehrschichtige Folie nach einem der Ansprüche 1 bis 3, **dadurch gekennzeichnet, daß** die Außenschicht neben Polyamid 6 ein Polyamid ausgewählt aus der Gruppe umfassend Polyamid 10, Polyamid 12, Polyamid 66, Polyamid 610, Polyamid 6I, Polyamid 612, Polyamid 6/66, Polyamid 6I/6T, Polyamid MXD6, Polyamid 6/6I, Polyamid 6/6T, Polyamid 6/IPDI, Copolymere der diese Polymere bildenden Monomere oder Mischungen dieser Polymere oder Copolymere enthält.

5. Mehrschichtige Folie nach einem der Ansprüche 1 bis 3, **dadurch gekennzeichnet, daß** die Außenschicht als Polyamid reines Polyamid 6 enthält.

6. Mehrschichtige Folie nach einem der Ansprüche 1 bis 5, **dadurch gekennzeichnet, daß** die in der Außenschicht dispergierten Partikel Teilchen aufweisen, die in zwei senkrecht zueinander stehenden, für jedes Teilchen beliebig wählbaren Richtungen jeweils eine Ausdehnung von wenigstens dem Zehnfachen der Ausdehnung der Teilchen in der Richtung mit der geringsten Ausdehnung aufweisen.

7. Mehrschichtige Folie nach Anspruch 6, **dadurch gekennzeichnet, daß** die Teilchen die kleinsten in der Dispersion eine starre Einheit bildenden Bestandteile sind.

8. Mehrschichtige Folie nach einem der Ansprüche 1 bis 7, **dadurch gekennzeichnet, daß** die in der Außenschicht dispergierten Partikel Schichtsilikate sind.

9. Mehrschichtige Folie nach einem der Ansprüche 1 bis 8, **dadurch gekennzeichnet, daß** die weiteren aus Polyamid bestehenden Schichten jeweils ein Polyamid ausgewählt aus der Gruppe Polyamid 6, Polyamid 10, Polyamid 12, Polyamid 66, Polyamid 610, Polyamid 6I, Polyamid 612, Polyamid 6/66, Polyamid 6I/6T, Polyamid MXD6, Polyamid 6/6I, Polyamid 6/6T, Polyamid 6/IPDI, andere aliphatische oder aromatische Homo- und Copolyamide oder Mischungen daraus, vorzugsweise reines Polyamid 6 enthalten.

10. Mehrschichtige Folie nach einem der Ansprüche 1 bis 9, **dadurch gekennzeichnet, daß** sie eine oder mehrere EthylenNinylalkohol-Copolymerisat-(EVOH-)haltige Schichten aufweist.

11. Mehrschichtige Folie nach Anspruch 10, **dadurch gekennzeichnet, daß** eine EVOH-haltige Schicht unmittelbar zwischen 2 polyamidhaltigen Schichten angeordnet ist, wovon ggf. eine die Außenschicht ist.

12. Mehrschichtige Folie nach einem der Ansprüche 1 bis 11, **dadurch gekennzeichnet, daß** sie eine wenigstens einschichtige Siegelschicht auf der der Außenschicht abgewandten Seite der mehrschichtigen Folie aufweist.

13. Mehrschichtige Folie nach einem der Ansprüche 1 bis 12, **dadurch gekennzeichnet, daß** sie eine oder mehrere haftvermittelnde Schichten aufweist.

14. Mehrschichtige Folie nach einem der Ansprüche 1 bis 13, **dadurch gekennzeichnet, daß** sie zusätzlich zu der Außenschicht und einer oder mehreren weiteren, aus Polyamid und gegebenenfalls üblichen Additiven bestehende Schichten sowie gegebenenfalls einer oder mehreren EVOHhaltigen Schichten, einer oder mehreren Siegelschichten sowie einer oder mehreren haftvermittelnden Schichten zusätzlich eine oder mehrere weitere polymere Schichten oder zwischen zwei inneren Schichten eine Schicht aus einem Metalloxid oder Nichtmetalloxid enthält.

15. Mehrschichtige Folie nach einem der Ansprüche 1 bis 14, **dadurch gekennzeichnet, daß** wenigstens die Außenschicht, gegebenenfalls auch mehrere oder alle Schichten nach der Extrusion einem Reckvorgang nur in Längsrichtung, nur in Querrichtung, zuerst in Längs- und anschließend in Querrichtung, simultan in Längs- und Querrichtung oder Kombinationen daraus unterzogen worden sind.

16. Mehrschichtige Folie nach einem der Ansprüche 1 bis 15, **dadurch gekennzeichnet, daß** sie als Blasfolie durch Coextrusion hergestellt worden ist.

17. Verwendung einer mehrschichtigen Folie nach einem der Ansprüche 1 bis 16 zur Verpackung von Lebensmitteln.

## Claims

1. Multilayer film, where appropriate having a sealable layer, and having an outer layer made from polyamide comprising from 0.1 to 3% by weight, based on the total weight of the composition forming the outer layer, of a nano-scale, particulate, dispersed nucleating agent, and also having at least one other layer made from polyamide, **characterized in that** a) based on the total weight of the polyamide in the outer layer, at least 90% of the polyamide forming the outer layer is composed of nylon-6, b) the smallest constituents forming a rigid unit in the particles dispersed in the outer layer have a dimension of not more than 100 nm, this being the number average of all of the constituents and at least one direction freely selectable for each constituent, c) where appropriate all of the other polyamide layers comprise the particles present in the outer layer to the extent of not more than one-tenth of the proportion by weight of the particles present in the outer layer, and d) the thickness of the outer layer is not more than 50% of the total thickness of all of the polyamide-containing layers.

2. Multilayer film according to Claim 1, **characterized in that** the proportion by weight of the particles dispersed in the outer layer, based on the total weight of the composition forming the outer layer, is from 0.2 to 2% by weight.

3. Multilayer film according to Claim 1 or 2, **characterized in that** the thickness of the outer layer is not more than 40% of the total thickness of all of the polyamide-containing layers.

4. Multilayer film according to any of Claims 1 to 3, **characterized in that** the outer layer comprises, besides nylon-6, a polyamide selected from the group consisting of nylon-10, nylon-12, nylon-6,6, nylon-6,10, nylon-6,I, nylon-6,12, nylon-6/6,6. nylon-6,I/6,T, nylon-MXD,6, nylon-6/6,I, nylon-6/6,T, nylon-6/IPDI, copolymers of the monomers forming these polymers, or a mixture of these polymers or copolymers.

5. Multilayer film according to any of Claims 1 to 3, **characterized in that** the polyamide present in the outer layer is pure nylon-6.

6. Multilayer film according to any of Claims 1 to 5, **characterized in that** the particles dispersed in the outer layer comprise particles each of which has, in two perpendicular directions freely selectable for each particle, a dimension of at least ten times the dimension of the particles in the direction with the smallest dimension.

7. Multilayer film according to Claim 6, **characterized in that** the particles are the smallest constituents forming a rigid unit in the dispersion.

8. Multilayer film according to any of Claims 1 to 7, **characterized in that** the particles dispersed in the outer layer are phyllosilicates.

9. Multilayer film according to any of Claims 1 to 8, **characterized in that** each of the other layers composed of polyamide comprises a polyamide selected from the group: nylon-6, nylon-10, nylon-12, nylon-6,6, nylon-6,10, nylon-6,I, nylon-6,12, nylon-6/6,6, nylon-6,I/6,T, nylon-MXD,6, nylon-6/6,I, nylon-6/6,T, nylon-6/IPDI, and other aliphatic or aromatic homo- and copolyamides, or a mixture of these, preferably pure nylon-6.

10. Multilayer film according to any of Claims 1 to 9, **characterized in that** it comprises one or more layers comprising ethylene-vinyl alcohol copolymer (EVOH).

11. Multilayer film according to Claim 10, **characterized in that** an EVOH-containing layer has been arranged directly between 2 polyamide-containing layers, of which, where appropriate, one is the outer layer.

12. Multilayer film according to any of Claims 1 to 11, **characterized in that** it comprises an at least single-layer sealable layer on that side of the multilayer film facing away from the outer layer.

13. Multilayer film according to any of Claims 1 to 12, **characterized in that** it comprises one or more adhesion-promoting layers.

14. Multilayer film according to any of Claims 1 to 13, **characterized in that**, in addition to the outer layer and one or more other layers composed of polyamide and, where appropriate, of conventional additives, and, where appropriate, one or more EVOH-containing layers, one or more sealable layers, and one or more adhesion-promoting layers, it also comprises one or more other polymeric layers or, between two inner layers, a layer made from a metal oxide or non-metal oxide.

15. Multilayer film according to any of Claims 1 to 14, **characterized in that** at least the outer layer, and where appropriate also more than one layer or all of the layers, have been subjected, after extrusion, to a stretching procedure only longitudinally, only transversely, first longitudinally and then transversely, or simultaneously longitudinally and transversely, or to a combination thereof.

16. Multilayer film according to any of Claims 1 to 15, **characterized in that** it is a blown film which has been produced by coextrusion.

17. Use of a multilayer film according to any of Claims 1 to 16 for the packaging of food or drink.

## Revendications

1. Film multicouches présentant le cas échéant une couche de scellement, avec une couche extérieure en polyamide contenant entre 0,1 et 3 % en poids par rapport au poids total de la composition formant la couche extérieure, d'un agent de nucléation dispersé, particulaire, nanoscopique et avec au moins une autre couche en polyamide, **caractérisé en ce que**
a) le polyamide formant la couche extérieure est constituée de polyamide 6 pour au moins 90 % par rapport à la masse totale du polyamide dans cette couche,
b) les plus petits constituants formant dans la dispersion une unité rigide, des particules dispersées dans la couche extérieure présentent en moyenne arithmétique pondérée de tous les constituants dans au moins une orientation pouvant être choisie de façon quelconque pour chaque constituant, une extension de pas plus de 100 nm,
c) le cas échéant, toutes les autres couches de polyamide présentent les particules contenues dans la couche supérieure jusqu'au maximum un dixième de la proportion en poids des particules contenues dans la couche extérieure et
d) l'épaisseur de la couche extérieure s'élève à moins de 50 % de l'épaisseur totale de toutes les couches contenant du polyamide.

2. Film multicouches selon la revendication 1, **caractérisé en ce que** la proportion en poids des particules dispersées dans la couche extérieure, rapportée au poids total de la composition constituant la couche extérieure, se situe entre 0,2 et 2 % en poids.

3. Film multicouches selon la revendication 1 ou 2, **caractérisé en ce que** l'épaisseur de la couche extérieure s'élève au maximum à 40 % de l'épaisseur totale de toutes les couches contenant du polyamide.

4. Film multicouches selon l'une quelconque des revendications 1 à 3, **caractérisé en ce que** la couche extérieure contient outre du polyamide 6 un polyamide sélectionné parmi le groupe comprenant polyamide 10, polyamide 12, polyamide 66, polyamide 610, polyamide 6I, polyamide 612, polyamide 6/66, polyamide 6I/6T, polyamide MXD6, polyamide 6/6I, polyamide 6/6T, polyamide 6/IPDI, copolymères des monomères formant ces polymères ou mélanges de ces copolymères.

5. Film multicouches selon l'une quelconque des revendications 1 à 3, **caractérisé en ce que** la couche extérieure contient en tant que polyamide du polyamide 6 pur.

6. Film multicouches selon l'une quelconque des revendications 1 à 5, **caractérisé en ce que** les particules dispersées dans la couche extérieure présentent des particules qui présentent dans deux orientations pouvant être choisies de façon quelconque pour chaque particule et se trouvant perpendiculairement l'une à l'autre respectivement une extension d'au moins le décuple de l'extension des particules dans l'orientation présentant l'extension la plus faible.

7. Film multicouches selon la revendication 6, **caractérisé en ce que** les particules sont les plus petits constituants formant une unité rigide dans la dispersion.

8. Film multicouches selon l'une quelconque des revendications 1 à 7, **caractérisé en ce que** les particules dispersées dans la couche extérieure sont des silicates en couche.

9. Film multicouches selon l'une quelconque des revendications 1 à 8, **caractérisé en ce que** les autres couches constituées de polyamide contiennent respectivement un polyamide sélectionné parmi le groupe polyamide 6, polyamide 10, polyamide 12, polyamide 66, polyamide 610, polyamide 6I, polyamide 612, polyamide 6/66, polyamide 6I/6T, polyamide MXD6, polyamide 6/6I, polyamide 6/6T, polyamide 6/IPDI, autres homo- et copolyamides aliphatiques ou aromatiques ou mélanges de ceux-ci, de préférence du polyamide 6 pur.

10. Film multicouches selon l'une quelconque des revendications 1 à 9, **caractérisé en ce qu'**il présente une ou plusieurs couche(s) contenant un copolymère d'éthylène et d'alcool vinylique (EVOH).

11. Film multicouches selon la revendication 10, **caractérisé en ce qu'**une couche contenant un EVOH est disposé directement entre 2 couches contenant un polyamide, dont l'une est le cas échéant la couche extérieure.

12. Film multicouches selon l'une quelconque des revendications 1 à 11, **caractérisé en ce qu'**il présente au moins une couche de scellement monocouche sur la face du film multicouches opposée à la couche extérieure.

13. Film multicouches selon l'une quelconque des revendications 1 à 12, **caractérisé en ce qu'**il présente une ou plusieurs couches facilitant l'adhérence.

14. Film multicouches selon l'une quelconque des revendications 1 à 13, **caractérisé en ce qu'**il contient outre la couche extérieure et une ou plusieurs autre(s) couche(s) constituée(s) de polyamide et le cas échéant d'additifs usuels ainsi que le cas échéant une ou plusieurs couche(s) contentant de l'EVOH, une ou plusieurs couches facilitant l'adhérence, en plus une ou plusieurs autre(s) couche(s) polymère(s) ou une couche d'oxyde métallique ou d'oxyde non métallique entre deux couches intérieures.

15. Film multicouches selon l'une quelconque des revendications 1 à 14, **caractérisé en ce qu'**au moins la couche extérieure, le cas échéant également plusieurs ou toutes les couches a (ont) été soumise(s) après l'extrusion à une opération d'étirage seulement dans le sens longitudinal, seulement dans le sens transversal, d'abord dans le sens longitudinal et ensuite dans le sens transversal, simultanément dans le sens longitudinal et dans le sens transversal, ou à des combinaisons de ces opérations.

16. Film multicouches selon l'une quelconque des revendications 1 à 15, **caractérisé en ce qu'**il a été fabriqué en tant que film soufflé par coextrusion.

17. Utilisation d'un film multicouche selon l'une quelconque des revendications 1 à 16 pour l'emballage de denrées alimentaires.
